# NEUE EUROPÄISCHE PATENTSCHRIFT

(11) **EP 2 134 902 B2**
(45) Veröffentlichungstag und Bekanntmachung des Hinweises auf die Entscheidung über den Einspruch: **08.03.2017**
(45) Hinweis auf die Patenterteilung: 17.08.2011
(21) Anmeldenummer: 08734875.1
(22) Anmeldetag: 28.03.2008
(51) Int. Cl.: E02B 8/02

(54) **VERFAHREN ZUR SEDIMENTVERFRACHTUNG IN STAUGEWÄSSERN**
METHOD FOR TRANSPORTING SEDIMENTS IN DAMMED BODIES OF WATER
PROCÉDÉ DE CHARRIAGE DE SÉDIMENTS DANS DES EAUX DE RETENUE

(30) Priorität: 04.04.2007 DE 102007016679
(43) Veröffentlichungstag der Anmeldung: 23.12.2009
(73) Patentinhaber: Detering, Michael, 59368 Werne (DE)
(72) Erfinder: Detering, Michael, 59368 Werne (DE)
(74) Vertreter: Geskes, Christoph
(86) Internationale Anmeldenummer: PCT/EP2008/002507
(87) Internationale Veröffentlichungsnummer: WO 2008/122377

(56) Entgegenhaltungen:
- DE-A1- 3 716 274
- DE-C- 417 161
- FR-A- 2 860 532
- US-A- 2 082 694
- US-A1- 2004 057 839

## Beschreibung

Die Erfindung betrifft ein Verfahren zur Verfrachtung von Sedimentablagerungen in Staugewässern, insbesondere von Wasserkraftanlagen, in Stau- und Speicherbecken beziehungsweise -räumen von Speicherkraftwerken, Pumpspeicherkraftwerken und Laufwasserkraftwerken, Wehranlagen und Schleusen, gemäß dem Oberbegriff von Anspruch 1.

Neben dem fließenden Wasser sind Schwebstoffe und Sedimente grundsätzlich wichtige Bestandteile der Morphologie von Fließgewässern. Schwebstoffe und Sedimente finden sich im Wasser praktisch aller Flüsse. In unverbauten Fließgewässern stehen Sedimentations- und Erosionsprozesse zumeist im Gleichgewicht. In diesem Zustand ändert sich ein Gewässerbett nur geringfügig. Wird ein Gewässer jedoch aufgestaut, ändern sich örtlich der Fließquerschnitt und die Strömungsgeschwindigkeit. In Folge setzt sich am Gewässerboden vermehrt Sediment ab. Gleiches gilt für die Staubecken von Wasserkraftwerken, wie z. B. Pumpspeicherkraftwerke, bei denen zwischen den einzelnen Betriebsvorgängen (Pump-/Turbinenbetrieb) das Wasser in relativer Ruhe verharrt. Das in diesen Fällen abgelagerte Sediment wird anders als in naturbelassenen Fließgewässern nicht mehr im gleichen Umfang erodiert, sondern nimmt im Laufe der Zeit am Gewässerboden an Menge zu und vermindert dadurch das nutzbare Stauvolumen.

Staubecken zum Beispiel von Wasserkraftwerken können in Abhängigkeit der auftretenden Fließgeschwindigkeiten und der damit korrelierenden Sohlschubspannung in zwei Bereiche aufgeteilt werden, nämlich in einen Bereich vorwiegend geringer Fließgeschwindigkeiten, in dem vorwiegend Sedimentationsprozesse stattfinden und einen Bereich, in dem zumindest teil- oder zeitweise, beispielsweise bei Pumpenbetrieb in Pumpspeicherkraftwerken, höhere Fließgeschwindigkeiten auftreten, die Erosionsprozesse verursachen. Der erste Bereich wird im Sinne der Erfindung nachstehend als Sedimentationsbereich bezeichnet, wohingegen der zweite Bereich nachstehend als Erosionsbereich bezeichnet wird. Die Grenze zwischen den beiden Bereichen wird als Erosionsgrenze definiert.

Die zur Zeit angewendeten Verfahren zur Sedimentverfrachtung beschränken sich im Wesentlichen auf die manuelle Entnahme, die sehr aufwendig und kostenintensiv ist. Bei der manuellen Entnahme des Sediments geht das entnommene Sediment in den Besitz des Entnehmenden über, der es kostenpflichtig zu entsorgen hat.

Andere aus dem Stand der Technik bekannte Verfahren zur Sedimentverfrachtung sind unter anderem in den Schriften DE 101 09 039 A1 und DE 41 10 781 C2 offenbart. Beide Verfahren beschreiben ein Verfahren zur Sedimentverfrachtung bei dem die Sedimentablagerungen durch einen Wasserstrahl mit dem umgebenden Wasser zu einer Trübe aufgewirbelt werden und durch eine natürliche und/oder künstlich erzeugte Strömung abtransportiert werden. In einem Staubecken würden diese Verfahren allerdings nur zu einer gleichmäßigen Verteilung der Sedimente im gesamten Staugewässer führen, wo sie sich erneut absetzen würden.

US 2,082,964 offenbart ein Sammelbecken mit geneigtem Bett, welches durch einen Hauptdamm am unteren Ende und mit seitlichen Wänden eingefasst wird. Am oberen Ende des Sammelbeckens erstreckt sich ein kleinerer Hilfsdamm, welcher ein zusätzliches Reservoir zum Sammeln von Schlick bildet.

FR 2 375 395 A1 offenbart ein Verfahren zur Bearbeitung von Stauräumen, bei welchem kontinuierlich mit einer Pumpvorrichtung Bodenmateriale aufgenommen und in eine Wasserfassung transportiert wird bis zu deren Öffnung.

Die Aufgabe der Erfindung ist es, die bereits bekannten Verfahren zur Verfrachtung von Sedimentablagerungen aus Staugewässern dahingehend zu verbessern, dass der Einsatz des Verfahrens möglichst einfach und energetisch effizient ist.

Diese Aufgabe wird erfindungsgemäß dadurch gelöst, dass die aufgenommenen Sedimentablagerungen durch Mittel zum Transport in den Erosionsbereich in der Nähe der Abflussorgane des betroffenen Stauraums verfrachtet werden, wo die verfrachteten und sedimentierten Sedimentablagerungen durch die von der Strömung verursachten Erosionsprozesse in das nachfolgende Gewässer abtransportiert werden. Günstig ist es, wenn die Sedimentablagerungen auf dem kürzesten Weg von dem Sedimentationsbereich in die Nähe der Abflussorgane transportiert werden. Die Abflussorgane können alternativ auch als Durchflussorgane angesprochen werden. Vorzugsweise werden die Sedimentablagerungen mechanisch oder hydraulisch, aufgenommen und innerhalb des Gewässers in die Nähe der Abflussorgane durch Nassbagger- oder Sprühverfahren, insbesondere des Staubeckens verfrachtet. Dabei wird vorzugsweise der oberwasserseitige Erosionsbereich im Bereich vor den Abflussorganen berücksichtigt, das heißt es kann zum Beispiel eine gleichmäßige Verteilung, gegebenenfalls mit bestimmten Querschnittsprofil der verfrachteten Sedimente, vorgesehen werden.

Der Begriff "in der Nähe" bezogen auf die Abflussorgane des betroffenen Stauraums umfasst im Sinne der vorliegenden Erfindung nicht die direkte Einbringung von Sedimentablagerungen in die Abflussorgane oder eine Ablagerung der aufgenommenen Sedimentablagerungen unmittelbar vor, das heißt unbeabstandet, den Abflussorganen.

Denn dies wäre mit dem wesentlichen Nachteil verbunden, dass beispielsweise bei Anfahren einer Turbine zur Stromerzeugung unmittelbar erhebliche Mengen der Sedimentablagerungen angezogen werden, was sich nachteilig auf die Lebensdauer der Turbine auswirkt. Darüber hinaus ist der Ort und/oder Abstand der Ablagerung der aufgenommenen Sedimentablagerungen auch abhängig von dem Durchmesser der vorhandenen Abflussorgane. Dabei gilt, dass je kleiner der Durchmesser der Abflussorgane ist, desto näher die Sedimentablagerungen vor diesen verfrachtet werden müssen. Es hat sich gezeigt, dass eine Verfrachtung der Sedimentablagerungen bis maximal etwa 1 m vor den Abflussorganen eines betroffenen Stauraums sehr gute Ergebnisse auch in Hinblick auf die unterschiedlichen Durchmesser vorhandener Abflussorgane ergibt. Weiter bevorzugt erfolgt die Verfrachtung der Sedimentablagerungen in einem Bereich von mindestens etwa 1,5 m, weiter bevorzugt mindestens etwa 2 m, noch weiter bevorzugt mindestens etwa 3 m vor den Abflussorganen des betroffenen Stauraums. Bei großen Staugewässeranlagen wird der Abstand vorzugsweise mindestens etwa 8 m betragen, und bevorzugt in einem Bereich von etwa 1 m bis etwa 100 m, weiter bevorzugt bis etwa 50m, liegen.

Die genannten Abstände zur Verfrachtung der Sedimentablagerungen sind abhängig von den Gegebenheiten des temporären Abflusses. Neben dem Durchmesser des Abfluss- oder Durchflussorgans sind der eigentliche Durchfluss und die Eigenschaften des Wassers (insbesondere die bereits vorhandene Sedimentkonzentration im oberlaufseitigen Wasser) Einfluss bestimmende Faktoren. Sie haben Einfluss auf den oder die Erosionsbereiche im Oberwasser bei geöffnetem Verschluss des Abfluss- bzw. Durchflussorgans

Die Abstände werden bestimmt zwischen der dem Staurauminneren zugewandten Öffnungsmündung der betroffenen Abflussorgane und der verfrachteten Sedimentablagerung. Der in der vorliegenden Erfindung verwendete Begriff der "Verfrachtung" umfasst dabei, bezogen auf die Sedimentablagerungen, das sich diese beabstandet von den Abflussorganen, gleichwohl in deren Nähe, ablagern.

Durch die vorliegende Erfindung wird auf Grund der Verfrachtung abgelagerter Sedimente lediglich in die Nähe von Abflussorganen eine unmittelbare Beimischung der aufgenommenen Sedimente dem durch die Abflussorgane abströmenden Wasser vermieden, und es wird innerhalb des Stauraums wieder ein eher einem natürlichen Zustand angeglichenes Sedimentprofil erzielt. Die Sedimentablagerungen werden dabei aus dem Sedimentbereich des Staugewässers in den Erosionsbereich des Staugewässers transportiert, wobei ein Transport in oder unmittelbar an das Abflussorgan des Staugewässers, was auch zu Verstopfungen desselben führen kann, vermieden wird.

Vorzugsweise weist das mindestens eine Abflussorgan des betroffenen Stauraums eine Vorrichtung zur Energiegewinnung, insbesondere eine Turbine auf. Grundsätzlich kann im Sinne der vorliegenden Erfindung es vorgesehen sein, dass das Staubecken nur ein Abflussorgan aufweist, es kann jedoch auch vorgesehen sein, dass zwei, drei, vier oder sonst wie mehrere Abflussorgane vorgesehen sind.

Wesentlich bei dem Gedanken der vorliegenden Erfindung ist des Weiteren, dass die in die Nähe von Abflussorganen, gleichwohl beabstandet von diesen, verfrachteten, aus dem Sedimentbereich aufgenommenen Sedimentablagerungen im Erosionsbereich durch Erosionsprozesse, das heißt durch Wasser, abgetragen werden. Hierdurch wird eine weitgehende Annäherung an ein natürliches, ungestautes Gewässersystem erzielt.

Das Verfahren wird in vorteilhafter Weise so ausgeführt, dass sich eine bestimmte Sedimentkonzentration an den Abflussorganen einstellt. In der Praxis hat sich ein Wert zwischen 10 mg und 100 g Sediment pro Liter Wasser, vorzugsweise zwischen 10 mg und 10 g Sediment/Liter als vorteilhaft erwiesen. Überraschenderweise ist eine solche Trübung des abfließenden Wassers für eventuell in den Abflussorganen vorgesehene Turbinen verträglich. Rein vorsorglich kann erfindungsgemäß vorgesehen sein, die Dichtungen der Turbinen mittels Wassers geringerer Trübung zu spülen, um möglichen Turbinenschäden vorzubeugen. Die Sedimentkonzentration kann je nach Hydrogeomorphologie beziehungsweise der Fließgeometrie des Gewässers auch Werte von deutlich über 100 g Sediment pro Liter Wasser betragen.

Erfindungsgemäß werden die Sedimentablagerungen durch Nassbagger- oder Spülverfahren aufgenommen und ggf. durch eine Saugpumpe transportiert. Dabei ist es zweckmäßig, wenn die Sedimentablagerungen durch eine Fräse aufgelockert werden, bevor sie aufgenommen werden.

Zur Aufnahme des Sediments haben sich Saugbagger als geeignet herausgestellt. Die Menge des aufgenommenen Sediments kann hierbei besonders einfach über die Leistung und/oder die Betriebsdauer des Saugbaggers eingestellt werden.

Die Aufnahme der Sedimentablagerungen im Sedimentbereich des Staubeckens kann automatisiert werden. Bei der Verwendung eines Saugbaggers, welcher als Schwimmbagger ausgebildet sein kann und an Seilen geführt werden kann, ist es vorteilhaft, die Position des Saugbaggers kontinuierlich und automatisch über mit dem Ufer verbundene Steuerseile zu verändern. Werden die Sedimentablagerungen immer nach demselben Muster aufgenommen, kann es zu einer Grabenbildung am Gewässerboden kommen. Durch eine regel- oder unregelmäßige Veränderung des Musters, nach dem die Sedimentablagerungen aufgenommen werden, wird dies zuverlässig verhindert.

Je nach Stärke der Sedimentablagerungen im Sedimentationsbereich kann das Verfahren intermittierend oder kontinuierlich angewendet werden, bevorzugt wird das Verfahren jedoch kontinulerlich betrieben. Unter kontinulerlich im Sinne der Erfindung ist die fortlaufende Durchführung des Verfahrens während mehrerer Betriebszyklen des Staugewässers, umfassend dessen Befüllung und Entleerung, zu verstehen. Im Gegensatz dazu, ist unter intermittierend im Sinne der Erfindung zu verstehen, dass das Verfahren regelmäßig nur während eines speziellen Betriebszyklus, wie z. B. der Entleerung des Staubeckens, durchgeführt wird. Des Weiteren kann das Verfahren ohne wesentliche Unterbrechungen während der gesamten Nutzungsdauer des Staubeckens, oder nur zeitlich begrenzt, beispielsweise im Sinne einer Sanierung zur Wiederherstellung des ursprünglichen Stauvolumen, angewendet werden.

Weitere Vorteile und Einzelheiten der Erfindung werden anhand von in den Zeichnungen dargestellten Ausführungsbeispielen näher erläutert.

Es zeigen:
- Fig. 1: eine schematische Ansicht eines Staubeckens, mit einer Unterteilung des Staubeckens in verschiedene Erosionsbereiche;
- Fig. 2: eine schematische Darstellung einer möglichen automatisierten Aufnahme der Sedimentablagerungen unter Wasser;
- Fig. 3: eine schematische Darstellung einer möglichen Verfrachtung von Sediment- ablagerungen in die Nähe eines Abflussorgans unter Wasser.

Zunächst sei vorausgeschickt, dass die Erfindung nicht auf die in den Figuren gezeigten Merkmalskombinationen beschränkt ist. Vielmehr sind die jeweils in der Beschreibung einschließlich der Figurenbeschreibung offenbarten Merkmale mit denjenigen in den Figuren angegebenen Merkmalen kombinierbar. Des Weiteren sei darauf hingewiesen, dass die in den Patentansprüchen aufgenommenen Bezugszeichen in keiner Weise den Schutzbereich der vorliegenden Erfindung beschränken sollen, sondern lediglich auf die in den Figuren gezeigten Ausführungsbeispiele verweisen.

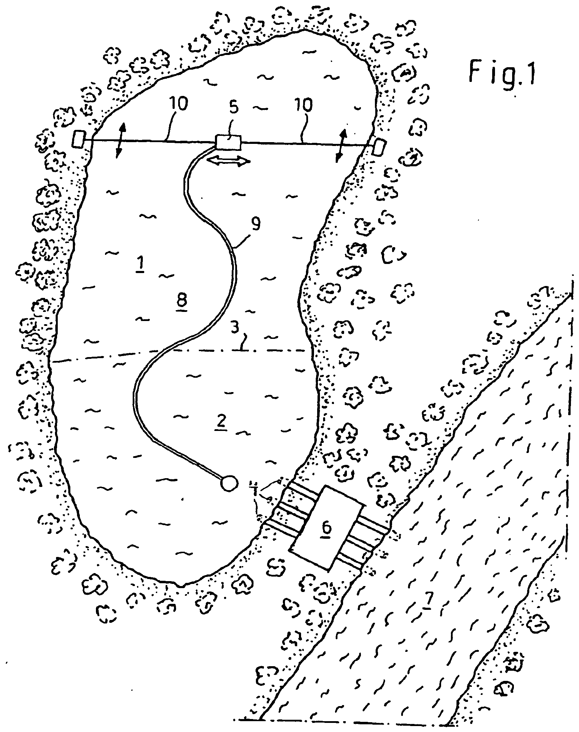

In Fig. 1 ist eine schematische Ansicht eines Staubeckens 8 von einem Pumpspeicherkraftwerk dargestellt. Ein Pumpspeicherkraftwerk dient zur Speicherung von produzierter aber momentan nicht benötigter Energie. Dazu wird von einem Pumpspeicherkraftwerk 6 Wasser aus einem fließenden Gewässer 7 in ein Staubecken 8 gepumpt, was als Pumpbetrieb bezeichnet wird. Wird die gespeicherte Energie benötigt, so wird das Wasser aus dem Staubecken 8 des Pumpspeicherkraftwerks 6 wieder in das fließende Gewässer 7 abgelassen, wobei gleichzeitig Turbinen angetrieben werden, die Energie erzeugen. Dieser Vorgang wird als Turbinenbetrieb bezeichnet. Während der beiden Betriebszustände, Pump- und Turbinenbetrieb, ist das Wasser im Staubekken 8 in Bewegung. Und in den Pausen zwischen den Betriebszuständen verharrt das Wasser in relativer Ruhe. Während des Pumpbetriebs werden mit dem Wasser auch Sedimente und Schwebstoffe in das Staubecken 8 gepumpt, die sich aufgrund der Strömungsverhältnisse in dem Staubecken 8 unter Umständen am Gewässerboden absetzen können. Anhand der Strömungsverhältnisse wird das Staubecken 8 in zwei Bereiche unterteilt. Zum einen in einen Sedimentationsbereich 1, indem sich immer mehr Sedimente ablagern, und zum anderen in einen Erosionsbereich 2, in der Nähe von Abflussorganen 4, in dem Sedimentablagerungen 12 während Abflussprozessen erodiert und abtransportiert werden. Die Grenze zwischen diesen beiden Bereichen ist als Erosionsgrenze 3 definiert. Um ein stetiges Ansteigen der Sedimentablagerungen 12 im Sedimentationsbereich 1 zu verhindern, werden erfindungsgemäß die Sedimentablagerungen 12 in den Erosionsbereich 2 verfrachtet, von dem aus sie durch nachfolgende Erosionsprozesse abtransportiert werden. Die Sedimentablagerungen 12 werden durch einen Saugbagger 5 aufgenommen und durch eine Förderleitung 9, die beabstandet von den Abflussorganen 4 endet, in die Nähe der Abflussorgane 4 verfrachtet. Das ganze Verfahren kann auch automatisiert durchgeführt werden, wobei der Saugbagger 5 beispielsweise durch Führungsseile 10 gesteuert wird. Der Vorteil des erfindungsgemäßen Verfahrens ist, dass die Sedimentablagerungen 12 aus dem Sedimentationsbereich 1 ohne Entnahme aus dem Gewässer abtransportiert werden.

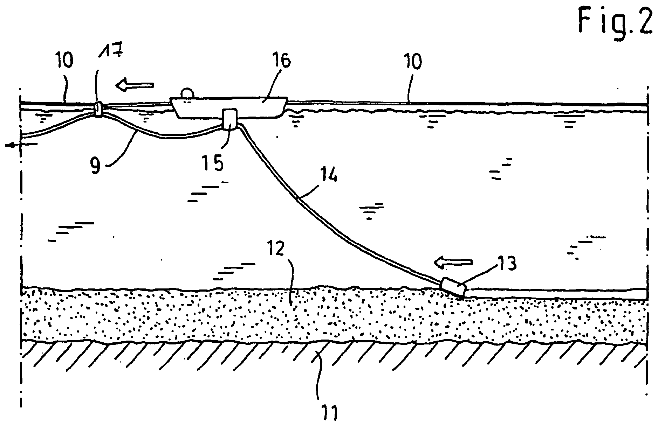

In Fig. 2 ist beispielhaft die Verfrachtung der Sedimentablagerungen 12 vom Gewässerboden 11 mittels einer Saugbaggeranordnung, bestehend aus einer Pumpeneinheit 15, einem Spülkopf 13 und Förderleitungen 14 und 9, schematisch dargestellt. Um die Sedimentablagerungen 12 vom Gewässerboden 11 zu lösen wird der Spülkopf 13 verwendet, wobei es zweckmäßig ist wenn der Spülkopf 13 eine Fräse zur Auflockerung der Sedimentablagerungen 12 umfasst. Die gelösten Sedimente werden mittels der Pumpeneinheit 15 durch die Aufnahmeleitung 14 aufgenommen. Die Pumpeneinheit 15 sorgt gleichzeitig für die Verfrachtung der Sedimente durch die Förderleitung 9 zum Erosionsbereich 2. Damit das erfindungsgemäße Verfahren automatisiert durchgeführt werden kann, ist in diesem Beispiel die Pumpeneinheit 15 der Saugbaggeranordnung an einen Ponton 16 montiert. Dieser Ponton 16 wird durch Steuerseile 10 über den gesamten Sedimentationsbereich 1 des Staubeckens 8 gelenkt, wodurch automatisch die Saugbaggeranordnung die Sedimentablagerungen 12 im gesamten Sedimentbereich 1 verfrachten kann. Werden die Sedimentablagerungen 12 immer nach einem bestimmten Muster aufgenommen, führt dies zu Grabenbildung am Gewässerboden. Dies wird durch eine regelmäßige Änderung des Musters verhindert.

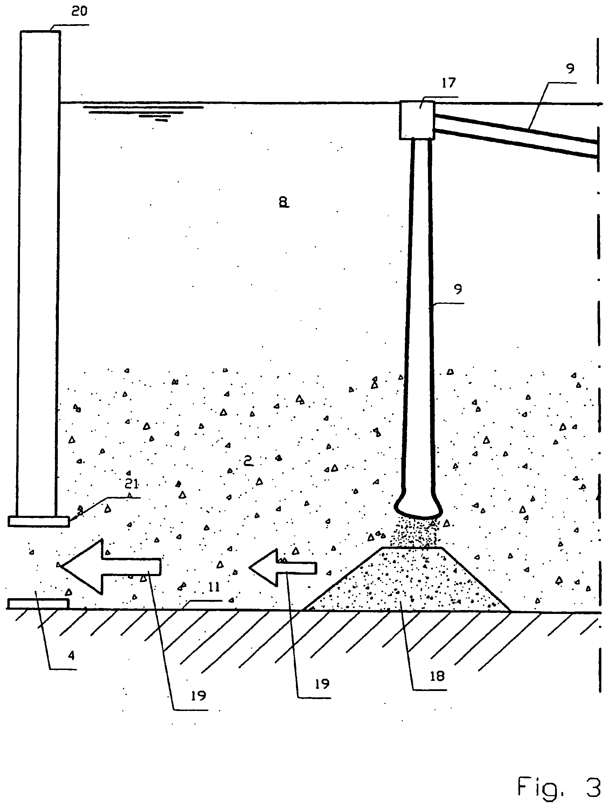

Fig. 3 zeigt den Erosionsbereich 2 des Staubeckens 8 mit einer Stauanlage 20 und einem in dieser angeordneten Abflussorgan 4, wobei über die Förderleitung 9, gehalten über Schwimmer 17 an der Wasseroberfläche, beabstandet von dem Abflussorgan 4 verfrachtete Sedimentablagerungen 18 angeordnet werden. Diese werden in Richtung der Pfeile 19 durch Erosionsprozesse durch das Abflussorgan 4 abgetragen. Die Verfrachtung der Sedimentablagerungen 18 auf dem Gewässerboden 11 erfolgt dabei beispielsweise in einem Abstand von etwa 10 m zu einer Öffnungsmündung 21 des Abflussorgans 4. Das Ende der Förderleitung kann mit einem Gewicht beschwert sein.

### Bezugszeichenliste:

- 1: Sedimentationsbereich
- 2: Erosionsbereich
- 3: Erosionsgrenze
- 4: Abflussorgane
- 5: Saugbagger
- 6: Pumpspeicherkraftwerk
- 7: Fließgewässer
- 8: Stau- bzw. Speicherraum
- 9: Förderleitung
- 10: Steuerseile
- 11: Gewässerboden
- 12: Sedimentablagerungen
- 13: Spülkopf
- 14: Aufnahmeleitung
- 15: Pumpeneinheit
- 16: Ponton
- 17: Schwimmer
- 18: verfrachtete Sedimentablagerung
- 19: Pfeile
- 20: Stauanlage
- 21: Öffnungsmündung des Abflussorgans 4

## Patentansprüche

1. Verfahren zur Verfrachtung von Sedimenten in Staugewässern, insbesondere von Wasserkraftanlagen, die durch Ablagerung aufgrund fehlender Erosionsprozesse, bedingt durch fehlende Strömung, entstanden sind, wobei die Sedimentablagerungen (12) durch Nassbagger- oder Spülverfahren im Sedimentbereich (1) des Staubeckens (8) aufgenommen werden, **dadurch gekennzeichnet, dass** die aufgenommenen Sedimentablagerungen in den Erosionsbereich (2) des staubeckens in der Nähe des oder der Abflussorgane (4) des Staubekkens (8) verfrachtet werden, wodurch die verfrachteten und sedimentierten Sedimtablagerungen durch die von der Strömung verursachten Erosionsprozesse des ablaufenden Wassers in fließende Gewässer abtransportiert werden.

2. Verfahren nach einem der Anspruch 1, **dadurch gekennzeichnet, dass** die zu verfrachtende Sedimentmenge so gewählt wird, dass sich im Bereich der Abflussorgane (4) eine Sedimentkonzentration zwischen 10 mg und 100 g Sediment je Liter Wasser, vorzugsweise zwischen 10 mg und 10 g Sediment je Liter Wasser einstellt.

3. Verfahren nach einem der Ansprüche 1 bis 2, **dadurch gekennzeichnet, dass** die Sedimentablagerungen (12) im Sedimentationsbereich (1) des Staubeckens (8) nach einem bestimmten Muster aufgenommen werden.

4. Verfahren nach Anspruch 3, **dadurch gekennzeichnet, dass** das Muster regelmäßig verändert wird.

5. Verfahren nach einem der Ansprüche 1 bis 4, **dadurch gekennzeichnet, dass** die Aufnahme und Verfrachtung der Sedimentablagerungen (12) automatisiert durchgeführt werden.

6. Verfahren nach einem der Ansprüche 1 bis 5, **dadurch gekennzeichnet, dass** die Aufnahme und Verfrachtung der Sedimentablagerungen (12) intermittierend durchgeführt wird.

7. Verfahren nach einem der Ansprüche 1 bis 5, **dadurch gekennzeichnet, dass** die Aufnahme und Verfrachtung der Sedimentablagerungen (12) kontinulerüch durchgeführt wird.

8. Verfahren nach einem der Ansprüche 1 bis 7, **dadurch gekennzeichnet, dass** die Sedimentverfrachtung während der gesamten Nutzungsdauer des Staubeckens (8) angewendet wird.

9. Verfahren nach einem der Ansprüche 1 bis 7, **dadurch gekennzeichnet, dass** die Sedimentverfrachtung nur zeitlich begrenzt zur Sanierung des Staubeckens (8) angewendet wird.

10. Verfahren nach einem der Ansprüche 1 bis 9, **dadurch gekennzeichnet, dass** die Sedimentablagerungen (12) durch einen Saugbagger (5) aufgenommen werden.

11. Verfahren nach Anspruch 10, **dadurch gekennzeichnet, dass** die transportierte Sedimentmenge über die Leistung und/oder die Betriebsdauer des Saugbaggers (5) eingestellt wird.

12. Verfahren nach einem der Ansprüche 1 bis 11, **dadurch gekennzeichnet, dass** die Sedimentablagerungen (12) vor der Aufnahme mit einer Fräse aufgelockert werden.

## Claims

1. Method for transporting sediment in dammed bodies of water, in particular, for hydroelectric power plants, wherein this sediment is produced by deposition due to the lack of erosion processes caused by the lack of current, whereby the sediment deposits (12) are taken up by dredging or flushing processes in the sedimentation zone (1) of the storage reservoir (8), **characterized in that** the sediment deposits being taken up are transported into the erosion zone (2) of the storage reservoir in the vicinity of the outflow element or elements (4) of the storage reservoir (8), whereby the transported and sedimented sediment deposits are transported away to bodies of flowing water by the erosion processes caused by the current in the effluent water.

2. Method according to Claim 1, **characterized in that** the quantity of sediment to be transported is selected so that, in the region of the outflow elements (4), a sediment concentration between 10 mg and 100 g of sediment for each liter of water, advantageously between 10 mg and 10 g of sediment for each liter of water, is set.

3. Method according to one of Claims 1 to 2, **characterized in that** the sediment deposits (12) in the sedimentation zone (1) of the storage reservoir (8) are taken up according to a defined pattern.

4. Method according to Claim 3, **characterized in that** the pattern is changed regularly.

5. Method according to one of Claims 1 to 4, **characterized in that** the taking-up and transportation of the sediment deposits (12) are performed automatically.

6. Method according to one of Claims 1 to 5, **characterized in that** the taking-up and transportation of the sediment deposits (12) are performed intermittently.

7. Method according to one of Claims 1 to 5, **characterized in that** the taking-up and transportation of the sediment deposits (12) are performed continuously.

8. Method according to one of Claims 1 to 7, **characterized in that** the sediment transportation is applied during the entire period of use of the storage reservoir (8).

9. Method according to one of Claims 1 to 7, **characterized in that** the sediment transportation is applied only with time limits for restoring the storage reservoir (8).

10. Method according to one of Claims 1 to 9, **characterized in that** the sediment deposits (12) are taken up by a suction dredger (5).

11. Method according to Claim 10, **characterized in that** the quantity of transported sediment is set by means of the output and/or the operating duration of the suction dredger (5).

12. Method according to one of Claims 1 to 11, **characterized in that** the sediment deposits (12) are broken up with a rotary cutter before being taken up.

## Revendications

1. Procédé pour le charriage de sédiments dans des eaux de retenue, en particulier de centrales hydrauliques, qui se sont formés par le dépôt consécutif à l'absence de processus d'érosion, dû à l'absence d'écoulement, les dépôts de sédiment (12) étant réceptionnés par dragues ou procédé de lavage dans la zone de sédiment (1) du bassin de retenue (8), **caractérisé en ce que** les dépôts de sédiment réceptionnés sont charriés dans la zone d'érosion (2) du bassin de retenue à proximité du ou des organes d'écoulement (4) du bassin de retenue (8), les dépôts de sédiment sédimentés et charriés étant évacués par les processus d'érosion, causés par l'écoulement, de l'eau s'évacuant dans des cours d'eau qui circulent.

2. Procédé selon l'une quelconque des revendication 1, **caractérisé en ce que** la quantité de sédiment à charrier est choisie de telle sorte qu'une concentration de sédiment comprise entre 10 mg et 100 g de sédiment par litre d'eau, de préférence entre 10 mg et 10 g de sédiment par litre d'eau, s'établit dans la zone des organes d'écoulement (4).

3. Procédé selon l'une quelconque des revendications 1 à 2, **caractérisé en ce que** les dépôts de sédiment (12) sont réceptionnés dans la zone de sédimentation (1) du bassin de retenue (8) selon un modèle défini.

4. Procédé selon la revendication 3, **caractérisé en ce que** le modèle est modifié régulièrement.

5. Procédé selon l'une quelconque des revendications 1 à 4, **caractérisé en ce que** la réception et le charriage des dépôts de sédiment (12) sont effectués de façon automatisée.

6. Procédé selon l'une quelconque des revendications 1 à 5, **caractérisé en ce que** la réception et le charriage des dépôts de sédiment (12) sont effectués de façon intermittente.

7. Procédé selon l'une quelconque des revendications 1 à 5, **caractérisé en ce que** la réception et le charriage des dépôts de sédiment (12) sont effectués de façon continue.

8. Procédé selon l'une quelconque des revendications 1 à 7, **caractérisé en ce que** le charriage de sédiment est utilisé pendant l'ensemble de la durée d'utilisation du bassin de retenue (8).

9. Procédé selon l'une quelconque des revendications 1 à 7, **caractérisé en ce que** le charriage de sédiment n'est utilisé que de façon limitée dans le temps pour l'assainissement du bassin de retenue (8).

10. Procédé selon l'une quelconque des revendications 1 à 9, **caractérisé en ce que** les dépôts de sédiment (12) sont réceptionnés par une drague suceuse (5).

11. Procédé selon la revendication 10, **caractérisé en ce que** la quantité de sédiment transportée est réglée par la puissance et/ou la durée d'exploitation de la drague suceuse (5).

12. Procédé selon l'une quelconque des revendications 1 à 11, **caractérisé en ce que** les dépôts de sédiment (12) sont ameublis avec une fraiseuse de labour avant la réception.
